# EUROPEAN PATENT APPLICATION

(11) **EP 4 387 349 A1**
(43) Date of publication of application: **19.06.2024**
(21) Application number: 21953499.7
(22) Date of filing: 12.08.2021
(51) Int. Cl.: H04W 64/00, H04W 52/02

(54) **TERMINAL AND COMMUNICATION METHOD**

(71) Applicant: NTT DOCOMO, INC., Tokyo 100-6150 (JP)
(72) Inventor: OKAMURA, Masaya, Tokyo 100-6150 (JP); OHARA, Tomoya, Tokyo 100-6150 (JP); NAKAMURA, Takuma, Tokyo 100-6150 (JP); HARADA, Hiroki, Tokyo 100-6150 (JP)
(74) Representative: Hoffmann Eitle
(86) International application number: PCT/JP2021/029754
(87) International publication number: WO 2023/017604

(57) **Abstract**

A terminal includes: a transmission unit configured to transmit a signal for positioning; and a control unit configured to perform control of transmitting the signal for positioning so that the signal for positioning is to be transmitted during a period other than an on-duration of a discontinuous reception operation.

## Description

### FIELD OF THE INVENTION

The present invention relates to a terminal and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In NR, in order to achieve reduction of terminal power consumption, a discontinuous reception (DRX) operation of the terminal to periodically try reception of a paging message from the network is being discussed (for example, non-patent document 2) .

In addition, in the release 17 NR positioning, the target is to improve positioning accuracy and to reduce latency as compared with the release 16 NR positioning. In addition, new scenarios are added such as an industrial IoT (Internet of Things) use case (for example, non-patent document 3).

### Citation List

### Non-Patent Document

Non-Patent Document 1: 3GPP TS 38.300 V16.6.0 (2021-07)
Non-Patent Document 2: 3GPP TS 38.321 V16.5.0 (2021-07)
Non-Patent Document 3: 3GPP TR 38.857 V17.0.0 (2021-03)

### SUMMARY OF THE INVENTION

### TECHNICAL PROBLEM

In the release 18 NR, improved accuracy, integrity, and power efficiency of positioning, which are carried over from the release 17 NR, are being discussed.

However, in the release 16 NR positioning, technical specifications do not take into account a discontinuous reception (DRX) operation. The terminal to which the discontinuous reception (DRX) operation is not configured does not transmit an uplink signal for positioning in a period other than the on-duration, and thus, there is a problem of degraded positioning accuracy.

The present invention has been made in view of the above points, and it is an object of the present invention to provide a technique that enables positioning in which a discontinuous reception operation is taken into account.

### SOLUTION TO PROBLEM

According to the disclosed technology, a terminal is provided. The terminal includes: a transmission unit configured to transmit a signal for positioning; and a control unit configured to perform control of transmitting the signal for positioning so that the signal for positioning is to be transmitted during a period other than an on-duration of a discontinuous reception operation.

### ADVANTAGEOUS EFFECTS OF INVENTION

According to the disclosed technique, a technique is provided that enables positioning in which a discontinuous reception operation is taken into account.

### BRIEF DESCRIPTION OF THE DRAWINGS

[Fig. 1] is a drawing illustrating a wireless communication system related to an embodiment of the present invention.
[Fig. 2] is a drawing illustrating a transmission timing of a positioning signal related to an embodiment of the present invention.
[Fig. 3] is a first drawing illustrating a transmission timing of a positioning signal related to an option 1-2 of an alternative 2 of an embodiment 1.
[Fig. 4] is a second drawing illustrating a transmission timing of a positioning signal related to an option 1-2 of an alternative 2 of an embodiment 1.
[Fig. 5] is a drawing illustrating a transmission timing of a positioning signal related to an option 2 of an alternative 2 of an embodiment 1.
[Fig. 6] is a drawing illustrating a transmission timing or a positioning signal related to an option 3 of an alternative 2 of an embodiment 1.
[Fig. 7] is a first drawing illustrating a transmission timing of a positioning signal related to an alternative 3 of an embodiment 1.
[Fig. 8] is a second drawing illustrating a transmission timing of a positioning signal related to an alternative 3 of an embodiment 1.
[Fig. 9] is a drawing illustrating a transmission timing or a positioning signal related to an alternative 1 of a pattern 1 of an embodiment 2.
[Fig. 10] is a first drawing illustrating a transmission timing of a positioning signal related to a variation 1 of an alternative 1 of a pattern 2 of an embodiment 2.
[Fig. 11] is a second drawing illustrating a transmission timing of a positioning signal related to a variation 1 of an alternative 1 of a pattern 2 of an embodiment 2.
[Fig. 12] is a first drawing illustrating a transmission timing of a positioning signal related to a variation 2 of an alternative 1 of a pattern 2 of an embodiment 2.
[Fig. 13] is a second drawing illustrating a transmission timing of a positioning signal related to a variation 2 of an alternative 1 of a pattern 2 of an embodiment 2.
[Fig. 14] is a third drawing illustrating a transmission timing of a positioning signal related to a variation 2 of an alternative 1 of a pattern 2 of an embodiment 2.
[Fig. 15] is a fourth drawing illustrating a transmission timing of a positioning signal related to a variation 2 of an alternative 1 of a pattern 2 of an embodiment 2.
[Fig. 16] is a fifth drawing illustrating a transmission timing of a positioning signal related to a variation 2 of an alternative 1 of a pattern 2 of an embodiment 2.
[Fig. 17] is a drawing illustrating a transmission timing or a positioning signal related to an alternative 2 of a pattern 2 of an embodiment 2.
[Fig. 18] is a drawing illustrating PRS resource mapping related to an embodiment 3.
[Fig. 19] is a first drawing illustrating a transmission timing of a positioning signal related to an embodiment 4.
[Fig. 20] is a second drawing illustrating a transmission timing of a positioning signal related to an embodiment 4.
[Fig. 21] is a drawing illustrating an example of a functional structure of a base station 10 in an embodiment of the present invention.
[Fig. 22] is a drawing illustrating an example of a functional structure of a terminal 20 in an embodiment of the present invention.
[Fig. 23] is a drawing illustrating an example of a hardware structure of the base station 10 or the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used appropriately. Although the conventional technique is related to the existing NR, the conventional technique is not limited to the existing NR.

In addition, in this specification, terms used in the technical specifications of the existing NR or LTE, such as PDCCH, RRC, MAC, DCI, etc., are used. However, the channel names, protocol names, signal names, functional names, or the like, used in this specification may be referred to as different names.

### (System configuration)

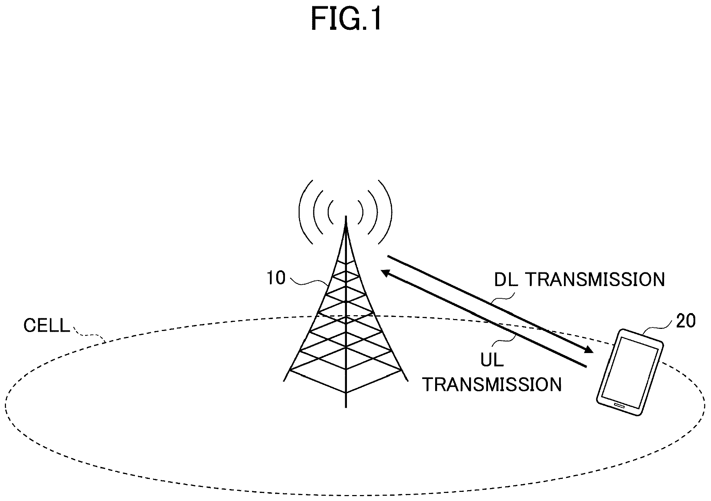

Fig. 1 is a drawing illustrating a wireless communication system related to an embodiment of the present invention.
As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of the radio signal may be defined in the time domain and the frequency domain, the time domain may be defined by the number of OFDM symbols, and the frequency domain may be defined by the number of sub-carriers or resource blocks. Further, a TTI (Transmission Time Interval) in the time domain may be a slot, or the TTI may be a subframe.

The base station 10 can perform carrier aggregation to communicate with the terminal 20 by bundling a plurality of cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and an NR-SSS. In addition, the synchronization signal may be an SSB. The system information is transmitted via, for example, NR-PBCH (Physical Broadcast Channel) or PDSCH (Physical Downlink Shared Channel), and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH (Physical Uplink Control Channel) and PDCCH (Physical Downlink Control Channel) is called a control signal, and what is transmitted via a shared channel such as PUSCH and PDSCH is called data. However, these names are examples.

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

### (Overview of embodiment)

As described above, in the conventional NR, technical specifications do not take into account a discontinuous reception (DRX) operation. The terminal to which the discontinuous reception (DRX) operation is configured does not transmit an uplink signal for positioning in a period other than the on-duration, and thus, there is a problem of degraded positioning accuracy.

In particular, in a case where monitoring of another channel is not frequently requested, the DRX cycle tends to be configured to the terminal to be longer in order to increase reduced power effects, and thus, positioning accuracy tends to be degraded.

In an embodiment of the present invention, in order to deal with the above-described problem, an uplink signal for positioning is transmitted even in a period other than an on-duration of a discontinuous reception (DRX) operation.

In a case where DRX is configured, the terminal 20 may assume that an uplink signal is to be transmitted during a period other than the on-duration.

Here, the assumed uplink signal may be a part of signals or channels. The terminal 20 may assume that the signal or channel to be transmitted is configured, activated, or indicated by the base station 10 via RRC, MAC-CE, or DCI.

A part of signals to be transmitted includes SRS, UL-PRS (UL Positioning Reference Signal), PUSCH, PUCCH, PRACH, etc. For example, in a case where UL-PRS is assumed to be transmitted, the terminal 20 may assume that one of: a positioning SRS; an SRS; or a positioning SRS and an SRS is to be transmitted, during a period other than the on-duration.

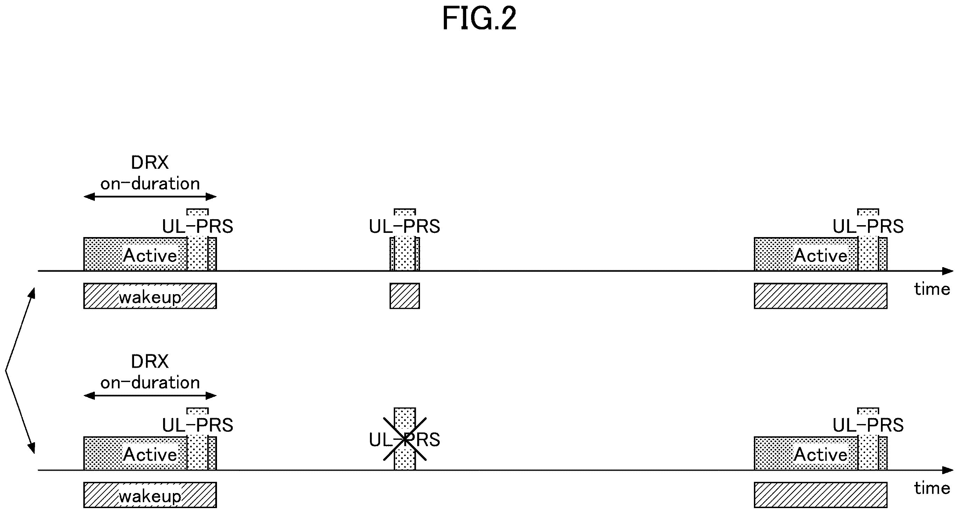

Fig. 2 is a drawing illustrating a transmission timing of a positioning signal related to an embodiment of the present invention. As illustrated in Fig. 2, the terminal 20 may assume that information indicating whether or not transmission of an uplink signal is to be performed during a period other than the on-duration may be configured, activated, or indicated by the base station 10 via RRC, MAC-CE, or DCI. The upper part of Fig. 2 illustrates a case in which uplink signal transmission during a period other than the on-duration is performed, and the lower part of Fig. 2 illustrates a case in which uplink signal transmission during a period other than the on-duration is not performed.

The terminal 20 may transmit, to the base station 10, a terminal capability signal indicating an operation of transmission of an uplink signal during a period other than the on-duration.

Hereinafter, as a specific embodiment related to an embodiment of the present invention, an embodiment 1, an embodiment 2, and embodiment 3, and an embodiment 4 will be described.

### (Embodiment 1)

In this embodiment, an example is shown in which a period of transmitting, by the terminal 20, signals such as a UL-PRS is configured (hereinafter, referred to as an on-duration for positioning). Specifically, in a case where the terminal 20 is in a DRX state, the terminal 20 may perform one of the alternatives described below.

### <Alternative 1>

The terminal 20 assumes that a UL-PRS signal alone is to be transmitted during the on-duration for positioning.

### <Alternative 2>

The terminal 20 assumes that one of the options described below is to be configured, activated, or indicated by the base station 10 via RRC, MAC-CE, or DCI.

### <Option 1>

Only the DRX on-duration is configured, activated, or indicated to the terminal 20. In other words, the on-duration for positioning is not configured, activated, or indicated to the terminal 20. In this case, the terminal 20 may further assume that an operation from among operations described below is performed.

### <Option 1-1>

The terminal 20 assumes that a UL-PRS is to be transmitted only during the DRX on-duration.

### <Option 1-2>

The terminal 20 also assumes that a UL-PRS is to be transmitted during a period other than the DRX on-duration.

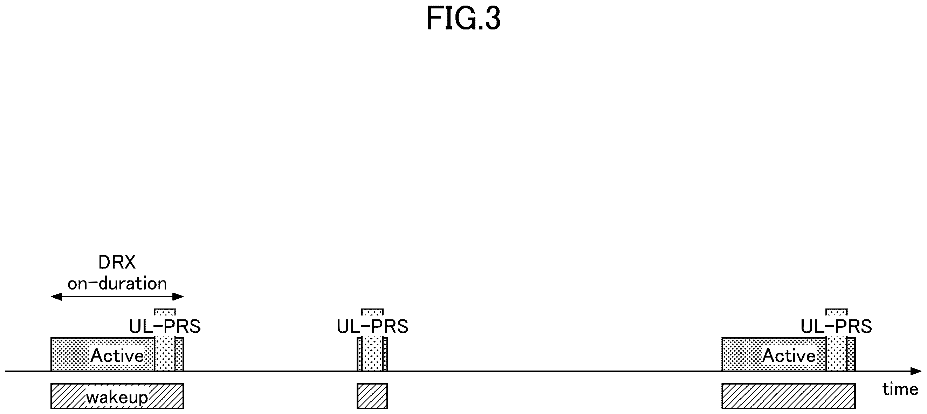

Fig. 3 is a first drawing illustrating a transmission timing of a positioning signal related to an option 1-2 of an alternative 2 of an embodiment 1. As illustrated in Fig. 3, the terminal 20 may be assumed to determine a timing for waking up for UL-PRS transmission, based on a parameter related to a period of UL-PRS, etc.

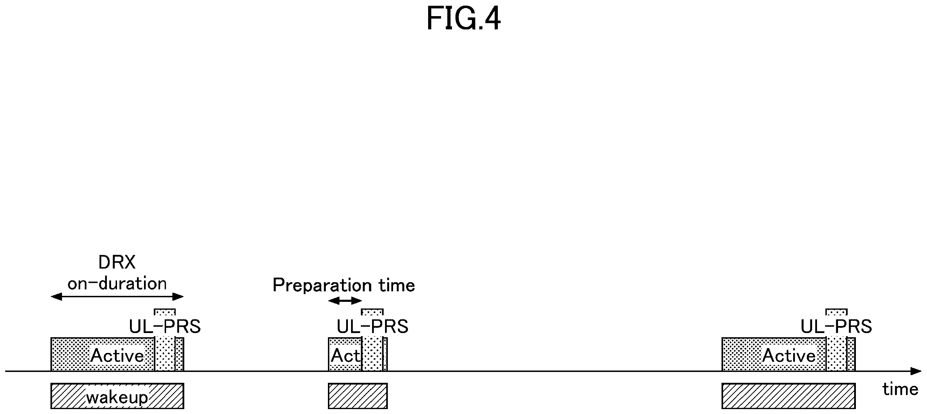

Fig. 4 is a second drawing illustrating a transmission timing of a positioning signal related to an option 1-2 of an alternative 2 of an embodiment 1. As illustrated in Fig. 4, the terminal 20 may assume that there is a preparation time immediately before the transmission timing of UL-PRS.

The terminal 20 may assume that the value indicating the length of the preparation time is to be configured, activated, or indicated by the base station 10 via RRC, MAC-CE, or DCI. In addition, the value indicating the length of the preparation time may be defined in the technical specifications in advance.

### <Option 2>

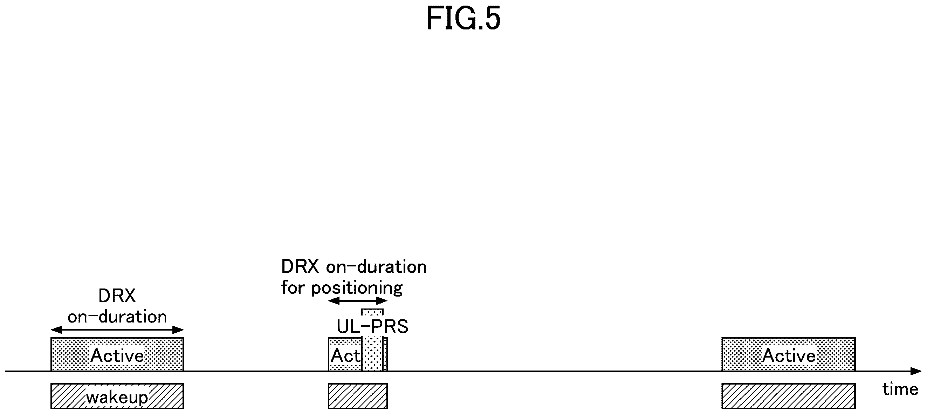

Fig. 5 is a drawing illustrating a transmission timing of a positioning signal related to an option 2 of an alternative 2 of an embodiment 1. As illustrated in Fig. 5, the terminal 20 assumes that a UL-PRS is to be transmitted only during the on-duration for positioning.

Note that the terminal 20 may assume that there is an overlap between the DRX on-duration and the on-duration for positioning.

### <Option 3>

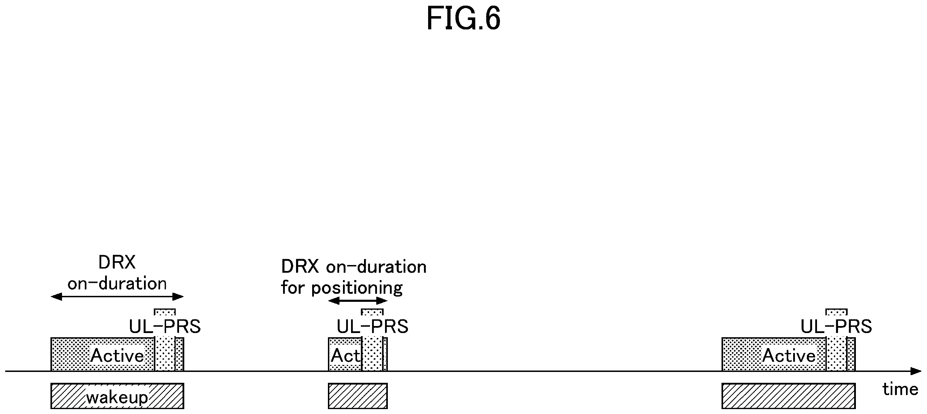

Fig. 6 is a drawing illustrating a transmission timing of a positioning signal related to an option 3 of an alternative 2 of an embodiment 1. As illustrated in Fig. 6, the terminal 20 assumes that a UL-PRS is to be transmitted during both the DRX on-duration and the on-duration for positioning. For example, the terminal 20 may determine whether or not to wake up in order to transmit a UL-PRS during the on-duration for positioning, based on the configured value of UL-PRS such as the transmission period.

### <Alternative 3>

In a case of using an RS or SSB for measurement, the terminal 20 is assumed to transmit a UL-PRS, etc., during a wake-up period for measurement. For example, the terminal 20 may be assumed to transmit a UL-PRS, etc., immediately after or before the measurement.

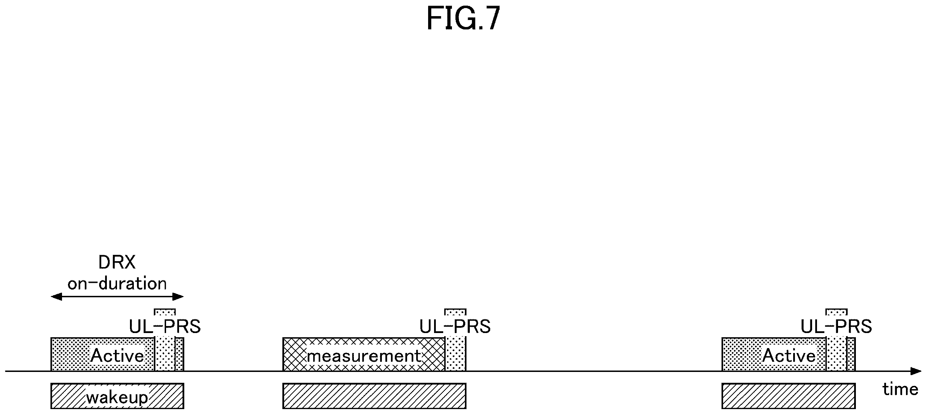

Fig. 7 is a first drawing illustrating a transmission timing of a positioning signal related to an alternative 3 of an embodiment 1. As illustrated in Fig. 7, the terminal 20 may be assumed to transmit a UL-PRS, etc., during the wake-up period for measurement and immediately after the measurement.

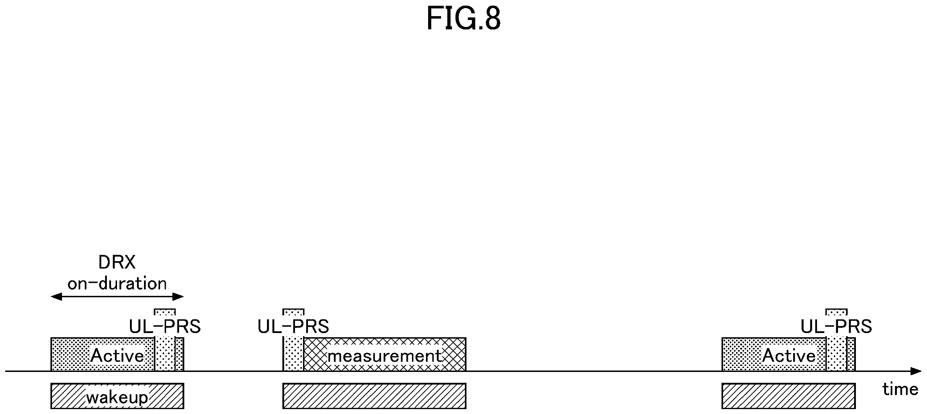

Fig. 8 is a second drawing illustrating a transmission timing of a positioning signal related to an alternative 3 of an embodiment 1. As illustrated in Fig. 7, the terminal 20 may be assumed to transmit a UL-PRS, etc., during the wake-up period for measurement and immediately before the measurement.

The terminal 20 can reduce the number of times of waking up by transmitting the UL-PRS, etc., during the wake-up period for measurement such as immediately before or after the measurement.

The terminal 20 may assume that which of the timing immediately before the measurement or the timing immediately after the measurement is to be used as the transmission timing of the UL-PRS, etc., is configured, activated, or indicated by the base station 10 via RRC, MAC-CE, or DCI. In addition, a value indicating which of the immediately before the measurement or the immediately after the measurement is to be used as the transmission timing of the UL-PRS, etc., may be defined in the technical specifications in advance.

In a case of performing any alternative, the terminal 20 may determine whether or not to transmit a UL-PRX, etc., in a DRX state, based on some reference. For example, the terminal 20 may assume that a reference threshold value regarding the positioning accuracy, measurement quality, etc., is to be indicated by the base station 10. In this case, for example, the terminal 20 transmits a UL-PRS, etc., in a DRX state in a case where the measured value of positioning, etc., does not exceeds the reference threshold value (the measurement quality is low), and does not transmit a UL-PRS, etc., in a DRX state in a case where the measured value of positioning, etc., exceeds the reference threshold value (the measurement quality is high).

### <Effects of embodiment 1>

According to a wireless communication system related to an embodiment of the present invention, the terminal 20 can perform positioning in a short period even in a DRX state.

### (Embodiment 2)

In this embodiment, an example is shown in which the terminal 20 determines whether or not to wake up during the DRX on-duration according to a wake up signal (WUS). Specifically, one of the patterns described below may be used.

### <Pattern 1>

Pattern 1 is a case in which the on-duration for positioning is not defined (release 16 NR). In this pattern, the terminal 20 may adopt one of the alternatives described below.

### <Alternative 1>

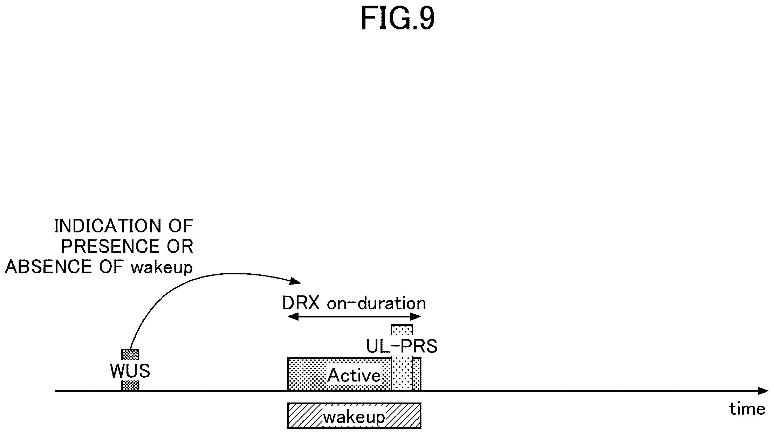

Fig. 9 is a drawing illustrating a transmission timing or a positioning signal related to an alternative 1 of a pattern 1 of an embodiment 2. The terminal 20 treats the UL-PRS, etc., in the same way as another signal. In other words, as illustrated in Fig. 9, the terminal 20 is assumed to determine whether or not to wake up to transmit a UL-PRS, etc., according to the WUS.

In this case, one of the variations described below may be assumed by the terminal 20.

### <Variation 1>

The terminal 20 assumes that the wakeup indicator (WI) is to be common for the UL-PRS, etc., and another signal. This variation corresponds to an operation of release 16 NR.

### <Variation 2>

The terminal 20 assumes that the WIs are to be indicated individually for the UL-PRS, etc., and for another signal. For example, the terminal 20 may assume that information is to be indicated indicating the terminal 20 to wake up to transmit a UL-PRS according to one WUS and not to wake up to transmit another signal.

### <Alternative 2>

The terminal 20 is assumed to ignore the WUS with respect to transmission of the UL-PRS, etc. In other words, the terminal 20 may transmit the UL-PRS, etc., regardless of presence or absence of WUS.

### <Pattern 2>

Pattern 2 is a case in which the on-duration for positioning is defined. In this pattern, the terminal 20 may adopt one of the alternatives described below.

### <Alternative 1>

The terminal 20 is assumed to determine whether or not to wake up during the on-duration for positioning, based on the WUS during the DRX on-duration. For example, the terminal 20 may assume that there is a WUS group in which the DRX on-duration and the on-duration for positioning are combined. Here, the terminal 20 may assume that the group number for waking up by the WUS is to be indicated, or may assume that a plurality of group numbers are to be indicated.

Furthermore, the terminal 20 may adopt one of the variations described below.

### <Variation 1>

The terminal 20 assumes that whether or not to wake up is to be applied in common for the DRX on-duration and the on-duration for positioning. For example, the WI may be common for the DRX on-duration and for the on-duration for positioning. Hereinafter, no wake-up is indicated in a case where the WI is 0, and no wake-up is indicated in a case where the WI is 0.

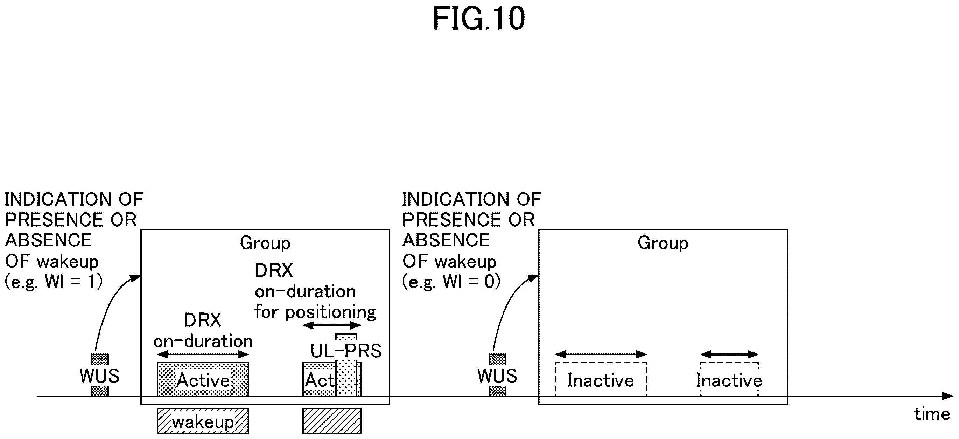

Fig. 10 is a first drawing illustrating a transmission timing of a positioning signal related to a variation 1 of an alternative 1 of a pattern 2 of an embodiment 2. As illustrated in Fig. 10, the terminal 20 wakes up both during the grouped DRX on-duration and on-duration for positioning in a case where the WI is 1, and does not wake up during the grouped DRX on-duration and on-duration for positioning in a case where the WI is 0.

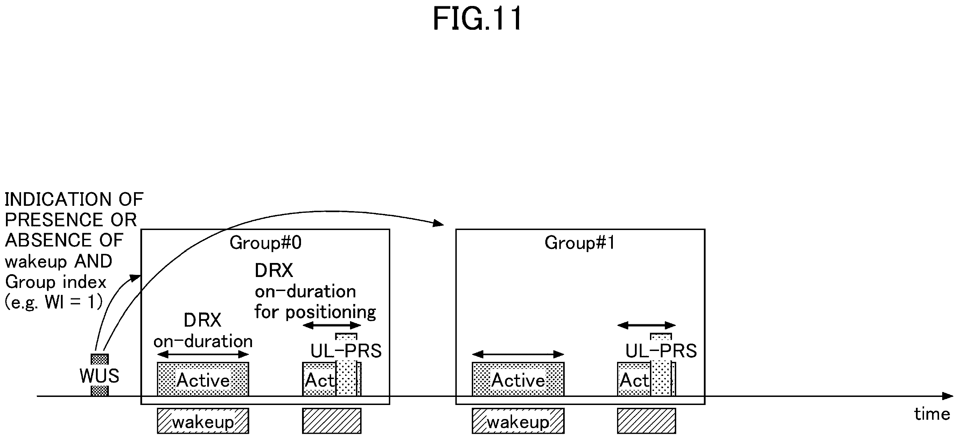

Fig. 11 is a second drawing illustrating a transmission timing of a positioning signal related to a variation 1 of an alternative 1 of a pattern 2 of an embodiment 2. The terminal 20 may assume that the group number for waking up, together with the WI, is to be indicated by the WUS. For example, as illustrated in Fig. 11, in one WUS, the group numbers 0 and 1, and WI=1 are indicated to the terminal 20. According to the above, the terminal 20 wakes up during the DRX on-duration and the on-duration for positioning included in the group number 0, and, in addition, wakes up during the DRX on-duration and the on-duration for positioning included in the group number 1.

### <Variation 2>

The terminal 20 assumes that whether or not to wake up is to be applied not in common for the DRX on-duration and the on-duration for positioning. For example, the terminal 20 assumes that the WI for the DRX on-duration and the WI for the on-duration for positioning are to be respectively indicated.

For example, the WI for the DRX on-duration and the WI for the on-duration for positioning are indicated to the terminal 20 by one WUS.

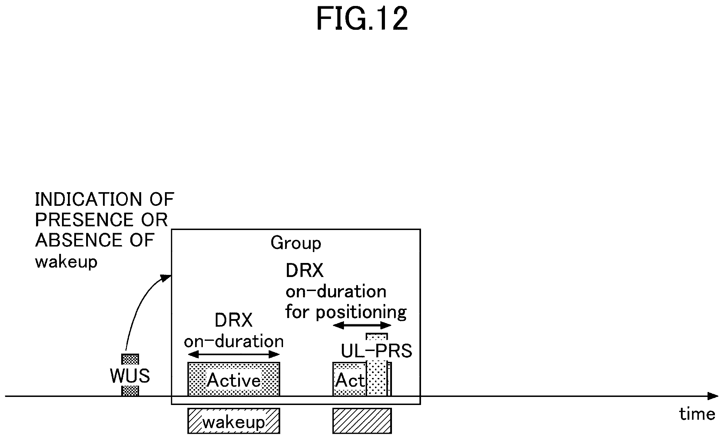

Fig. 12 is a first drawing illustrating a transmission timing of a positioning signal related to a variation 2 of an alternative 1 of a pattern 2 of an embodiment 2. When one WUS indicates that the WI for the DRX on-duration is equal to 1 and that the WI for the on-duration for positioning is equal to 1, the terminal 20 wakes up during both the DRX on-duration and the on-duration for positioning included in the same group.

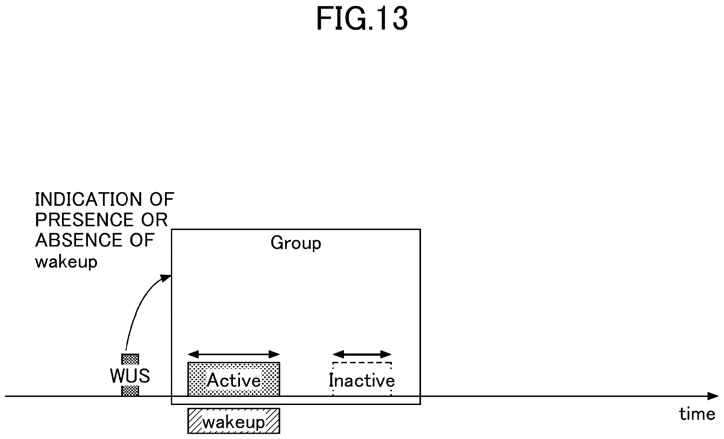

Fig. 13 is a second drawing illustrating a transmission timing of a positioning signal related to a variation 2 of an alternative 1 of a pattern 2 of an embodiment 2. When one WUS indicates that the WI for the DRX on-duration is equal to 1 and that the WI for the on-duration for positioning is equal to 0, the terminal 20 wakes up during the DRX on-duration and does not wake up during the on-duration for positioning, the DRX on-duration and the on-duration for positioning being included in the same group.

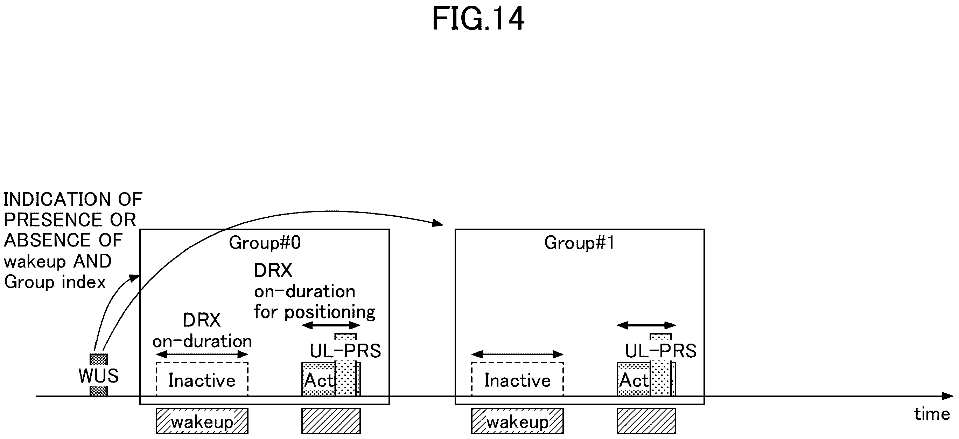

Fig. 14 is a third drawing illustrating a transmission timing of a positioning signal related to a variation 2 of an alternative 1 of a pattern 2 of an embodiment 2. The terminal 20 may assume that the group number for waking up, together with the WI, is to be indicated by the WUS. For example, as illustrated in Fig. 14, in one WUS, the group numbers 0 and 1, the WI for the DRX on-duration being equal to 0, and the WI for the on-duration for positioning being equal to 1 are indicated to the terminal 20. According to the above, the terminal 20 does not wake up during the DRX on-duration included in the group number 0 and the group number 1, and wakes-up during the on-duration for positioning included in the group number 0 and the group number 1.

The number N_g of groups for indicating wake-up in one WUS may be defined by technical specifications. The terminal 20 may assume that the number is to be configured, activated, or indicated by the base station 10 via RRC, MAC-CE, or DCI. For example, the value of N_g is expected to be larger for a case where the positioning frequency is lower, or for a case of IoT devices.

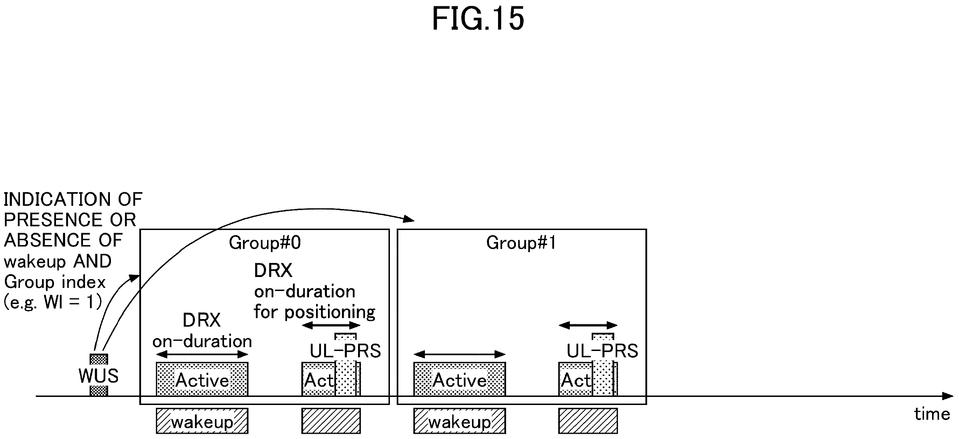

Fig. 15 is a fourth drawing illustrating a transmission timing of a positioning signal related to a variation 2 of an alternative 1 of a pattern 2 of an embodiment 2. When N_g is defined as 2 or is configured, activated, or indicated by the base station 10, the terminal 20 is assumed to receive, via one WUS, an indication of wake-up during the DRX on-duration and the on-duration for positioning included in two groups.

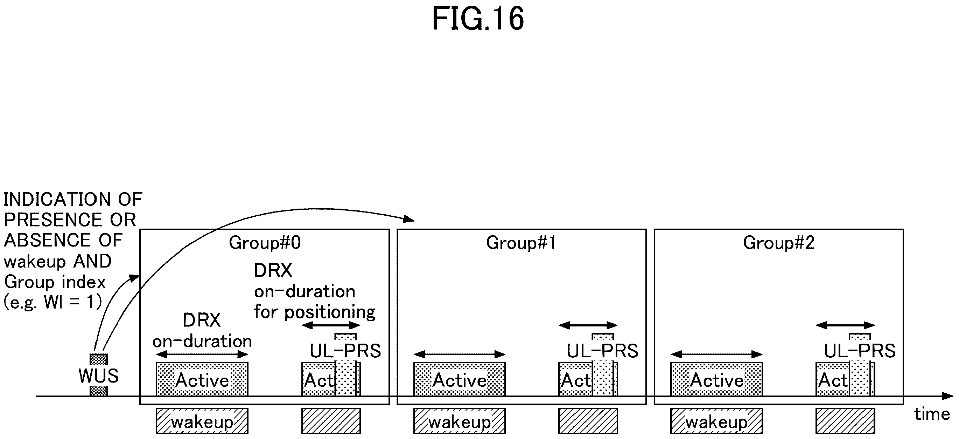

Fig. 16 is a fifth drawing illustrating a transmission timing of a positioning signal related to a variation 2 of an alternative 1 of a pattern 2 of an embodiment 2. When N_g is defined as 3 or is configured, activated, or indicated by the base station 10, the terminal 20 is assumed to receive, via one WUS, an indication of wake-up during the DRX on-duration and the on-duration for positioning included in three groups.

In addition, the terminal 20 may assume that the group number is to be not indicated by the WUS and that the target of the indication is to be all of the DRX on-durations and the on-durations for positioning until the subsequent WUS.

The above-described group may include one DRX on-duration and one on-duration for positioning, may include two or more of one of or both of the DRX on-duration and the on-duration for positioning, or is not required to include one of the DRX on-duration and the on-duration for positioning.

### <Alternative 2>

The terminal 20 may assume that the WUS for the on-duration for positioning is to be indicated by the base station 10 separately from the WUS for the DRX on-duration.

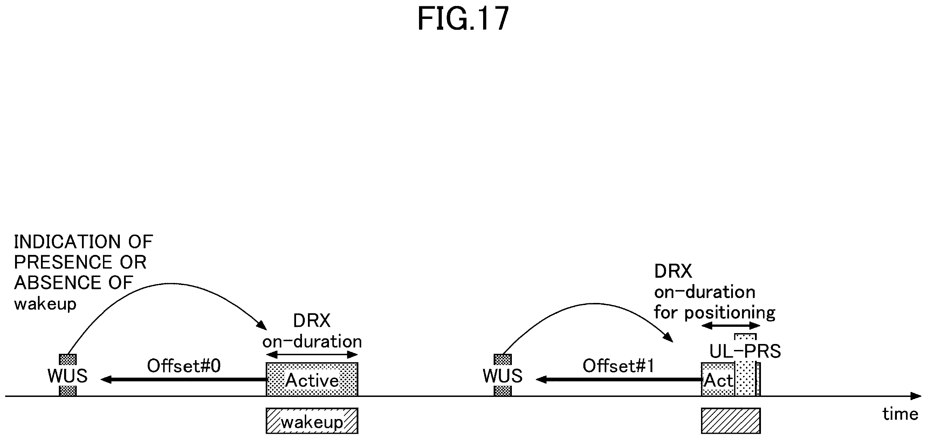

Fig. 17 is a drawing illustrating a transmission timing of a positioning signal related to an alternative 2 of a pattern 2 of an embodiment 2. As illustrated in Fig. 17, the terminal 20 may assume that different reception timing offsets are to be configured respectively to the WUS for the DRX on-duration and the WUS for the on-duration for positioning.

Note that the terminal 20 may assume that the common offset is to be configured to the WUS for the DRX on-duration and the WUS for the on-duration for positioning.

### <Effects of embodiment 2>

According to a wireless communication system related to an embodiment of the present invention, the terminal 20 can perform flexible positioning in a DRX state. In addition, the terminal 20 can avoid waking up at the timing at which the positioning is not needed, and thus, the power consumption can be lower.

### (Embodiment 3)

In this embodiment, an example is described in which the terminal 20 assumes that a PRS parameter for the DRX state is to be configured. The PRS parameter may be, for example, a transmission period, resource mapping, etc.

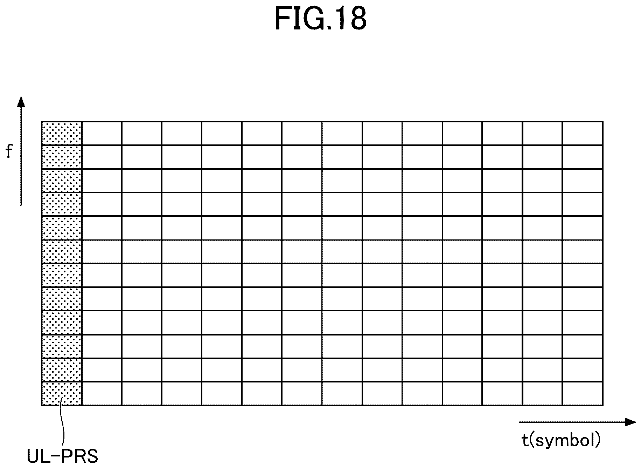

Fig. 18 is a drawing illustrating PRS resource mapping related to an embodiment 3. The terminal 20 may apply different PRS resource mapping between a case of a DRX state and a case of a non-DRX state.

For example, in release 16 NR, the frequency resources used for UL-PRS are defined to be non-contiguous. Therefore, with respect to the UL-PRS transmission, the terminal 20 may be assumed to use non-contiguous frequency resources in a case of a non-DRX state, and to use contiguous frequency resources as illustrated in Fig. 18 in a case of a DRX state.

Regarding the terminal in a DRX state, the frequency of transmission and reception is low, and thus, the interference with another terminal is small and there is no problem even if the frequency resources are contiguous, thereby positioning measurement accuracy can be improved.

### <Effects of embodiment 3>

According to a wireless communication system related to an embodiment of the present invention, the terminal 20 can indicate different UL-PRS configurations respectively to the terminal in a DRX state and to the terminal in a non-DRX state.

### (Embodiment 4)

In this embodiment, in a case where DRX is configured, the terminal 20 determines whether or not to assume an uplink signal is to be transmitted during a period other than the DRX on-duration, based on a timer.

For example, the terminal 20 may transition to a default operation in a case where a timer for measuring the elapsed time from the previous transmission of a UL PRS or the like, expires. The default operation is, for example, an operation in which an uplink signal is not assumed to be transmitted during a period other than the on-duration.

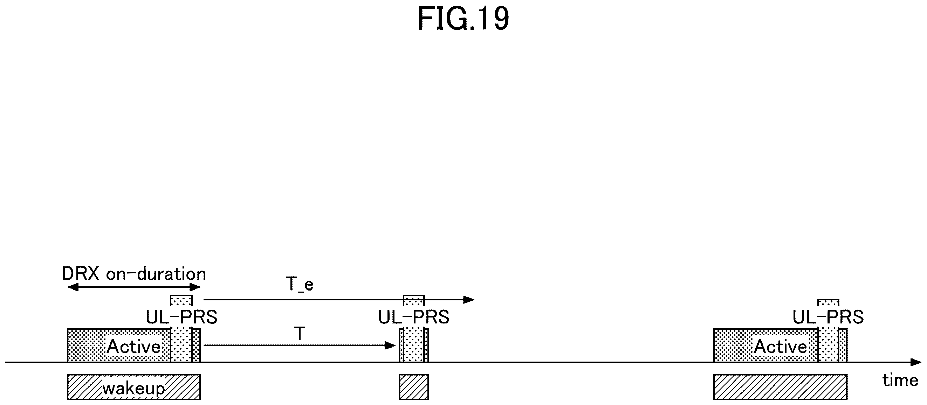

Fig. 19 is a first drawing illustrating a transmission timing of a positioning signal related to an embodiment 4. In a case where the time T from the previous transmission of a UL-PRS, or the like, does not exceed the elapsed time threshold value T_e, the terminal 20 may determine that the timer has not expired, and may maintain an operation in which an uplink signal is assumed to be transmitted.

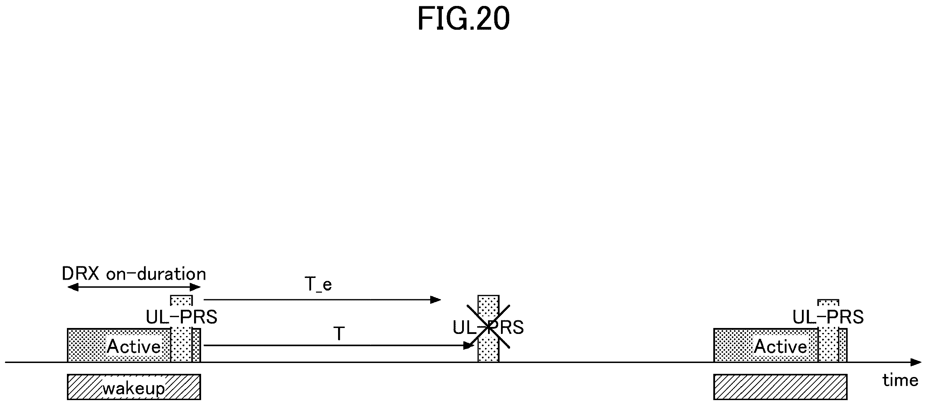

Fig. 20 is a second drawing illustrating a transmission timing of a positioning signal related to an embodiment 4. In a case where the time T from the previous transmission of a UL-PRS, or the like, exceeds the elapsed time threshold value T_e, the terminal 20 may determine that the timer has expired and may transition to an operation in which an uplink signal is not assumed to be transmitted.

Note that the terminal 20 is not required to assume that an uplink signal is to be transmitted until the expiration of a timer for measuring the elapsed time from the previous transmission of an UL-PRS, or the like, and may assume that an uplink signal is to be transmitted in a case where the timer expires.

In addition, the terminal 20 may determine whether or not to assume that an uplink signal is to be transmitted during a period other than the DRX on-duration, based on a reference other than the timer. For example, the terminal 20 may determine whether or not to assume that an uplink signal is to be transmitted during a period other than the DRX on-duration, based on whether or not the positioning accuracy, measurement quality, reception quality, or the like, satisfies the reference. In other words, the terminal 20 may assume that an uplink signal is to be transmitted in a case where the positioning accuracy, measurement quality, reception quality, or the like, does not satisfy the reference.

In addition, the terminal 20 may determine whether or not to assume that an uplink signal is to be transmitted during a period other than the DRX on-duration, based on the timer and a reference other than the timer.

The above-described references such as threshold values including T_e, positioning accuracy, measurement quality, and reception quality may be defined in the technical specifications. In addition, the terminal 20 may assume that the above-described references such as threshold values including T_e, positioning accuracy, measurement quality, and reception quality are to be configured, activated, or indicated by the base station 10 via RRC, MAC-CE, or DCI.

### <Effects of embodiment 4>

According to a wireless communication system related to an embodiment of the present invention, the waking-up frequency for UL-PRS transmission can be controlled appropriately.

### (Modified embodiments)

In a wireless communication system related to each embodiment described above, the term "DRX" may be replaced with "Connected DRX" (CDRX/C-DRX), "Extended DRX" (EDRX/E-DRX/ECDRX/E-CDRX), "Enhanced DRX" (EDRX/E-DRX/ECDRX/E-CDRX), etc.

The term "preparation time" may be replaced with "preparation period", "additional time", "additional period", "offset", etc.

The UL-PRS related to each embodiment described above may mean an SRS for measurement, may simply mean an SRS, or, may mean a PRS different therefrom.

In each embodiment described above, the description of the transmission timing of a UL-PRS, etc., may be regarded as the description of the reception timing of a DL-PRS, etc. Furthermore, the terminal 20 may assume that the switching between the transmission of a UL-PRS, etc., and the reception of a DL-PRS, etc., is to be configured, activated, or indicated by the base station 10 via RRC, MAC-CE, or DCI.

### (Device configuration)

Next, a functional configuration example of the base station 10 and the terminal 20 for performing the processes and operations described above will be described.

### <Base station 10>

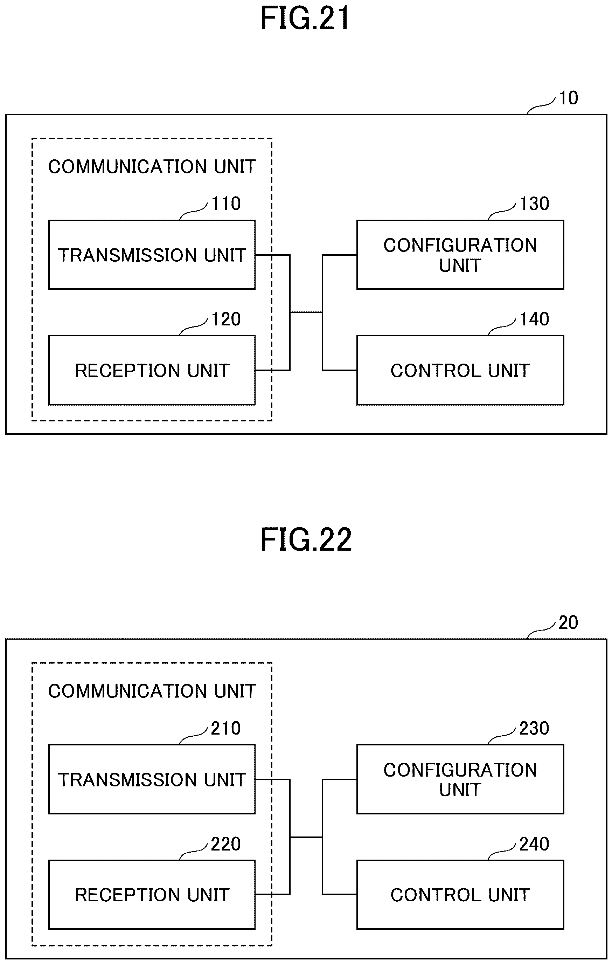

Fig. 21 is a diagram illustrating an example of a functional configuration of the base station 10. As shown in Fig. 21, the base station 10 includes a transmission unit 110, a reception unit 120, a configuration unit 130, and a control unit 140. The functional structure illustrated in Fig. 21 is merely an example. Functional divisions and names of functional units may be anything as long as operations according to an embodiment of the present invention can be performed. Further, the transmission unit 110 and the reception unit 120 may be combined and may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, DCI via PDCCH, data via PDSCH, and the like, to the terminal 20.

The configuration unit 130 stores preset configuration information and various configuration information items to be transmitted to the terminal 20 in a storage device included in the configuration unit 130 and reads the preset configuration information from the storage apparatus if necessary.

The control unit 140 performs scheduling of the terminal 20 for DL reception or UL transmission, via the transmission unit 110. In addition, the control unit 140 includes a function of performing LBT. The functional units related to signal transmission in the control unit 140 may be included in the transmission unit 110, and the functional units related to signal reception in the control unit 140 may be included in the reception unit 120. Further, the transmission unit 110 may be referred to as a transmitter, and the reception unit 120 may be referred to as a receiver.

### <Terminal 20>

Fig. 22 is a diagram illustrating an example of a functional configuration of the terminal 20. As shown in FIG. 22, the terminal 20 includes a transmission unit 210, a reception unit 220, a configuration unit 230, and a control unit 240. The functional structure illustrated in Fig. 22 is merely an example. Functional divisions and names of functional units may be anything as long as operations according to an embodiment of the present invention can be performed. the transmission unit 210 and the reception unit 220 may be combined and may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the reception unit 220 has a function of receiving NR-PSS, NR-SSS, NR-PBCH, DL/UL/SL control signals, DCI via PDCCH, data via PDSCH, etc., transmitted from the base station 10. In addition, for example, with respect to the D2D communications, the transmission unit 210 may transmit, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 120 may receive, from the another terminal 20, PSCCH, PSSCH, PSDCH, or PSBCH.

The configuration unit 230 stores various configuration information items received from the base station 10 or the another terminal by the reception unit 220 in the storage device included in the configuration unit 230, and reads them from the storage device as necessary. In addition, the configuration unit 230 also stores pre-configured configuration information. The control unit 240 controls the terminal 20. In addition, the control unit 240 includes a function of performing LBT.

The terminal in an embodiment of the present invention may be configured as the terminal described in each item below. In addition, a communication method below may be performed.

### <Configuration related to an embodiment of the present invention>

### (First item)

A terminal including: a transmission unit configured to transmit a signal for positioning; and
a control unit configured to perform control of transmitting the signal for positioning so that the signal for positioning is to be transmitted during a period other than an on-duration of a discontinuous reception operation.

### (Second item)

The terminal as described in the first item, wherein the control unit performs control of transmitting the signal for positioning during a period configured as a period for transmitting the signal for positioning.

### (Third item)

The terminal as described in the second item, wherein the control unit determines whether or not to wake up during a period configured as the period for transmitting the signal for positioning by a wake-up signal.

### (Fourth item)

The terminal as described in any one of items 1 to 3, wherein a parameter related to the signal for positioning in a state of the discontinuous reception operation is configured to the control unit.

### (Fifth item)

The terminal as described in any one of items 1 to 4, wherein the control unit determines whether or not to assume that the signal for positioning is to be transmitted during the period other than the on-duration of the discontinuous reception operation, based on at least one of an elapsed time from the transmission of the signal for positioning and a positioning quality in a case where the discontinuous reception operation is configured.

### (Sixth item)

A communication method performed by a terminal, the communication method including:
transmitting a signal for positioning; and
performing control of transmitting the signal for positioning so that the signal for positioning is to be transmitted during a period other than an on-duration of a discontinuous reception operation.

According to any of the above-described configurations, a technique is provided that enables positioning in which a discontinuous reception operation is taken into account. According to the second item, the terminal 20 can perform positioning in a short period even in a discontinuous reception state. According to the third item, the terminal 20 can perform flexible positioning in a discontinuous reception state. According to the fourth item, the terminal 20 can indicate different configurations respectively to the terminal in a discontinuous reception state and to the terminal in a non-discontinuous reception state. According to the fifth item, the waking-up frequency for signal transmission for positioning can be controlled appropriately.

### (Hardware structure)

In the above functional structure diagrams used for describing an embodiment of the present invention (Fig. 21 and Fig. 22), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

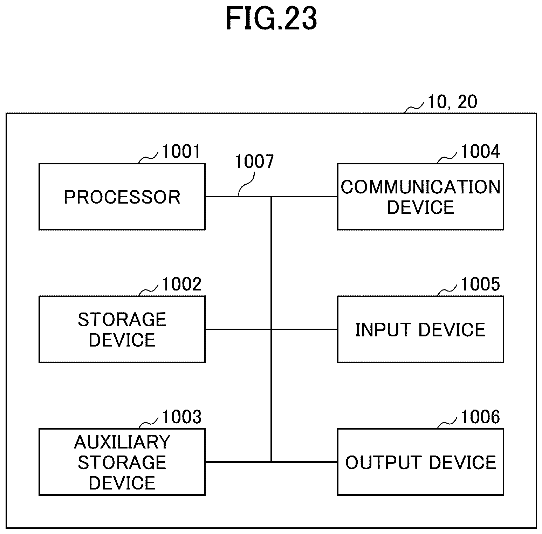

For example, the base station 10, terminal 20, etc., according to an embodiment of the present disclosure may function as a computer for processing the radio communication method of the present disclosure. Fig. 23 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 21 may be realized by control programs that are stored in the storage device 1002 and are executed by the processor 1001. Further, for example, the control unit 240 of the terminal 20 illustrated in Fig. 22 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network and a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD) . For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction) . Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI, UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the terminal. For example, each aspect/embodiment of the present disclosure may be applied to a configuration in which communications between the base station and the terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Similarly, the terminal in the present disclosure may be read as the base station. In this case, the function of the terminal described above may be provided by the base station.

The term "determining" used in the present specification may include various actions or operations. The "determining" may include, for example, a case in which "judging", "calculating", "computing", "processing", "deriving", "investigating", "looking up", "search", "inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe. Further, a slot may be referred to as a unit time. The unit time may vary for each cell depending on the numerology.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TT I), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, in a case where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a transmission unit configured to transmit a signal for positioning; and
a control unit configured to perform control of transmitting the signal for positioning so that the signal for positioning is to be transmitted during a period other than an on-duration of a discontinuous reception operation.

2. The terminal as claimed in claim 1, wherein
the control unit performs control of transmitting the signal for positioning during a period configured as a period for transmitting the signal for positioning.

3. The terminal as claimed in claim 2, wherein
the control unit determines whether or not to wake up during a period configured as the period for transmitting the signal for positioning by a wake-up signal.

4. The terminal as claimed in any one of claims 1 to 3, wherein
a parameter related to the signal for positioning in a state of the discontinuous reception operation is configured to the control unit.

5. The terminal as claimed in any one of claims 1 to 4, wherein
the control unit determines whether or not to assume that the signal for positioning is to be transmitted during the period other than the on-duration of the discontinuous reception operation, based on at least one of an elapsed time from the transmission of the signal for positioning and a positioning quality in a case where the discontinuous reception operation is configured.

6. A communication method performed by a terminal, the communication method comprising:
transmitting a signal for positioning; and
performing control of transmitting the signal for positioning so that the signal for positioning is to be transmitted during a period other than an on-duration of a discontinuous reception operation.
